# EUROPÄISCHE PATENTANMELDUNG

(11) **EP 1 783 708 A1**
(43) Veröffentlichungstag der Anmeldung: **09.05.2007**
(21) Anmeldenummer: 05021849.4
(22) Anmeldetag: 06.10.2005
(51) Int. Cl.: G07F 19/00

(54) **Transaktionsverfahren und -system**

(71) Anmelder: First Data Corporation, Greenwood Village, CO 80111 (US)
(72) Erfinder: Albrecht, Norbert, 16341 Panketal (DE); Beer, Robert, 72557 Mutlangen (DE); Zinke, Gerd, 12683 Berlin (DE); Dragoudakis, Diamantis, 75249 Kieselbronn (DE)
(74) Vertreter: Beyer, Andreas

(57) **Zusammenfassung**

Bei einem Transaktionsverfahren werden Transaktionsberechtigungs-Kenndaten übermittelt, die beispielsweise durch maschinelles Lesen mindestens einer Kenninformation von einem Transaktionsberechtigungsmedium (20) gewonnen werden. Es wird eine gespeicherte erste Liste (26) bereitgestellt, welche in Zuordnung zu einer Vielzahl verschiedener Transaktionsberechtigungs-Kenndaten jeweils einen Transaktionsabwicklungs-Kenncode enthält, der für die Abwicklung der Transaktion benötigt wird. Es wird auf die erste Liste (26) zugegriffen, um einen den übermittelten Transaktionsberechtigungs-Kenndaten zugeordneten Transaktionsabwicklungs-Kenncode zu ermitteln. Unter Verwendung des aus der ersten Liste (26) ermittelten Transaktionsabwicklungs-Kenncodes wird dann ein Transaktionsabwicklungsdatensatz erzeugt dieser über ein Kommunikationsnetz (28) an ein elektronisches Transaktionsabwicklungssystem (30) übermittelt.

## Beschreibung

Die Erfindung betrifft ein Transaktionsverfahren sowie ein Transaktionssystem.

Es sind Transaktionsverfahren und -systeme bekannt, bei denen von einem Transaktionsberechtigungsmittel eines Transaktionsteilnehmers Kenninformationen gelesen werden, welche ein Transaktionskonto des Transaktionsteilnehmers identifizieren. Beispielsweise können die Kenninformationen eine Kontonummer des Transaktionskontos sowie einen Namen für den Transaktionsteilnehmer enthalten. Mit den gelesenen Kenninformationen - oder zumindest einem Teil hiervon - wird dann ein Datensatz erzeugt, der zur Abwicklung der Transaktion über ein Datenkommunikationsnetz an ein auf das Transaktionskonto des Transaktionsteilnehmers (mittelbar oder unmittelbar) zugreifendes elektronisches Transaktionsabwicklungssystem übermittelt wird. Bei einer derartigen Vorgehensweise besteht das Problem der Datensicherheit, denn Unbefugte können beispielsweise die zum Lesen der Kenninformationen verwendeten Lesemittel manipulieren und so Kenntnis von der Nummer und ggf. vom Inhaber des Transaktionskontos erlangen. Die Kenntnis dieser Informationen macht Manipulationen an dem Transaktionskonto naturgemäß leicht.

Aufgabe der Erfindung ist es, die Datensicherheit bei elektronischen Transaktionen zu erhöhen.

Zur Lösung dieser Aufgabe ist erfindungsgemäß ein Transaktionsverfahren vorgesehen, umfassend die Schritte:
- Übermitteln von Transaktionsberechtigungs-Kenndaten,
- Bereitstellen einer gespeicherten ersten Liste, welche in Zuordnung zu einer Vielzahl verschiedener Transaktionsberechtigungs-Kenndaten jeweils mindestens einen Transaktionsabwicklungs-Kenncode enthält,
- Zugreifen auf die erste Liste zur Ermittlung eines den übermittelten Transaktionsberechtigungs-Kenndaten zugeordneten Transaktionsabwicklungs-Kenncodes,
- Erzeugen eines Transaktionsabwicklungsdatensatzes unter Verwendung des aus der ersten Liste ermittelten Transaktionsabwicklungs-Kenncodes und
- Übermitteln des Transaktionsabwicklungsdatensatzes über ein Kommunikationsnetz an ein elektronisches Transaktionsabwicklungssystem.

Gemäß einem Vorrichtungsaspekt ist außerdem ein Transaktionssystem vorgesehen, umfassend:
- einen ersten Datenspeicherbereich, in welchem eine erste Liste gespeichert ist, die in Zuordnung zu einer Vielzahl verschiedener Transaktionsberechtigungs-Kenndaten jeweils mindestens einen Transaktionsabwicklungs-Kenncode enthält,
- Listenzugriffsmittel, welche dazu eingerichtet sind, übermittelte Transaktionsberechtigungs-Kenndaten zu erhalten und auf die erste Liste zur Ermittlung eines den übermittelten Transaktionsberechtigungs-Kenndaten zugeordneten Transaktionsabwicklungs-Kenncodes zuzugreifen, und
- Abwicklungsdatensatzerzeugungsmittel, welche dazu eingerichtet sind, einen Transaktionsabwicklungsdatensatz unter Verwendung des aus der ersten Liste ermittelten Transaktionsabwicklungs-Kenncodes zu erzeugen und den Transaktionsabwicklungsdatensatz über ein Kommunikationsnetz an ein elektronisches Transaktionsabwicklungssystem zu übermitteln.

Die erfindungsgemäße Lösung basiert auf der Bereitstellung einer gespeicherten Konkordanzliste, aus welcher sich für eine Mehrzahl von verschiedenen Transaktionsberechtigungs-Kenndaten jeweils ein Transaktionsabwicklungs-Kenncode entnehmen lässt. Die Konkordanzliste ermöglicht es, einen für die Transaktionsabwicklung benötigten Kenncode nicht unmittelbar bereitstellen zu müssen. Stattdessen können eine oder mehrere andere Kenninformationen übermittelt werden, sofern eine eindeutige Zuordnung zwischen dieser Kenninformation bzw. diesen Kenninformationen und dem für die Transaktionsabwicklung tatsächlich benötigten Kenncode definiert ist. Zweckmäßigerweise geben die Transaktionsberechtigungs-Kenndaten keinen unmittelbaren Hinweis auf den schließlich in den Transaktionsabwicklungsdatensatz einzufügenden Kenncode. Die Transaktionsberechtigungs-Kenndaten können beispielsweise eine von einem Hersteller oder Herausgeber eines Transaktionsberechtigungsmediums vergebene Nummer umfassen, die das Transaktionsberechtigungsmedium als Gegenstand eindeutig identifiziert, jedoch für die spätere Transaktionsabwicklung keine Bedeutung haben muss.

Alternativ oder zusätzlich ist es vorstellbar, eine Telefonnummer, eine Pass- oder Personalausweisnummer oder eine andere personenbezogene Kennnummer eines Transaktionsteilnehmers oder/und ein oder mehrere biometrische Merkmale des Transaktionsteilnehmers für die Bildung der Transaktionsberechtigungs-Kenndaten zu verwenden. Als biometrische Merkmale kommen beispielsweise Fingerabdruck und Irisbild in Frage. Geeignete Lesegeräte für derartige biometrische Merkmale sind im Handel erhältlich; sie können die gelesenen Merkmal in geeignete Daten umwandeln, die im Rahmen der Erfindung zumindest einen Teil der Transaktionsberechtigungs-Kenndaten bilden können.

Erst mit Hilfe der Konkordanzliste kann bei der erfindungsgemäßen Lösung der Transaktionsabwicklungsdatensatz erstellt werden. Ohne Zugriff auf die Konkordanzliste bleibt ein in betrügerischer Absicht erfolgter "Abhör"-Angriff auf die Transaktionsberechtigungs-Kenndaten ohne Erfolg. Die Erfindung sorgt so für eine erhöhte Datensicherheit. Dies gilt insbesondere in Architekturen, die einen vergleichsweise sicheren Kommunikationspfad für die Übermittlung des Transaktionsabwicklungsdatensatzes bereitstellen, beispielsweise durch Verwendung eines besonders sicheren Übertragungsprotokolls, die aber für die Übermittlung der Transaktionsberechtigungs-Kenndaten bis zu den Listenzugriffsmitteln nur einen vergleichsweise unsicheren Kommunikationspfad bereitstellt, der vergleichsweise leicht abhörbar oder manipulierbar ist.

Gewünschtenfalls können die Erzeugung der Transaktionsberechtigungs-Kenndaten und die Speicherung der Konkordanzliste bzw. die Umsetzung der Transaktionsberechtigungs-Kenndaten in den Transaktionsabwicklungs-Kenncode an räumlich getrennten Orten erfolgen, was eine gleichzeitige Manipulation an den für die Erzeugung der Transaktionsberechtigungs-Kenndaten vorgesehenen Mitteln und den auf die Konkordanzliste zugreifenden Listenzugriffsmitteln im wesentlichen ausschließt.

Zur Erzeugung der Transaktionsberechtigungs-Kenndaten können mindestens eine Kenninformation maschinell von einem Kenninformationsträgerobjekt gelesen und auf Grundlage der gelesenen mindestens einen Kenninformation wenigstens ein Teil der Transaktionsberechtigungs-Kenndaten gebildet werden. Bei dem Kenninformationsträgerobjekt kann es sich um ein spezielles Transaktionsberechtigungsmedium handeln, das allein der Transaktionsberechtigung dient, wie beispielsweise eine Zahlungs- oder Wertkarte. Es kann sich auch um ein Ausweisdokument handeln, etwa einen Pass oder einen Führerschein. Geeignete Lesevorrichtungen, um von einem Ausweisdokument oder einem beispielsweise kartenförmigen Transaktionsberechtigungsmedium Daten maschinell zu lesen, sind in der Fachwelt wohlbekannt. Es versteht sich, dass die Form des Transaktionsberechtigungsmediums keine Rolle im Rahmen der Erfindung spielt und deshalb auch Transaktionsberechtigungsmedien mit anderen Formen als einer Kartenform als Kenninformationsträgerobjekt dienen können.

Sollen die Transaktionsberechtigungs-Kenndaten biometrische Informationen enthalten, können Körperteile eines Menschen wie etwa Finger oder Auge als Kenninformationsträgerobjekt dienen.

Es kann alternativ oder zusätzlich mindestens eine mittels einer benutzerbedienbaren Eingabevorrichtung eines Datenverarbeitungsgeräts eingegebene Kenninformation erfasst werden, auf deren Grundlage dann wenigstens ein Teil der Transaktionsberechtigungs-Kenndaten gebildet wird. Die Eingabevorrichtung kann beispielsweise eine Tastatur oder/und eine Zeigervorrichtung eines Computersystems umfassen.

Denkbar ist darüber hinaus, dass zumindest ein Teil der Transaktionsberechtigungs-Kenndaten in einem Träger gespeichert ist und von diesem selbsttätig in Antwort auf ein bestimmtes transaktionsbezogenes Auslösesignal übermittelt wird. Ein Beispiel hierfür ist ein transaktionsfähig eingerichtetes (d.h. mit geeigneter Software für Transaktionsanwendungen ausgestattetes) Mobiltelefon, das eine ihm zugeordnete Teilnehmerrufnummer oder eine andere Kennnummer als eine zur Bildung der Transaktionsberechtigungs-Kenndaten zu verwendende Kenninformation selbsttätig in Antwort auf eine Transaktionsinitüerung durch den Benutzer übermittelt. Auch ein sogenannter RF-Chip (*radio frequency chip*), wie er in Zahlungskarten, aber auch in beliebigen anderen Gegenständen eingebaut sein kann, seien diese speziell zur Transaktionsberechtigung vorgesehen oder seien sie primär für andere Zwecke entwickelt, kann als Träger wenigstens eines Teils der Transaktionsberechtigungs-Kenndaten dienen. Derartige Chips sind mit einer Funktion ausgestattet, die es ihnen ermöglicht, drahtlos bestimmte in dem Chip gespeicherte Informationen auszusenden, in der Regel in Antwort auf ein externes Aufforderungssignal.

Gemäß einer bevorzugten Weiterbildung kann das erfindungsgemäße Transaktionsverfahren die Schritte umfassen:
- Bereitstellen einer gespeicherten zweiten Liste, welche eine Mehrzahl verschiedener Kennnummern enthält,
- Vergleichen wenigstens eines Teils der übermittelten Transaktionsberechtigungs-Kenndaten mit wenigstens einem Teil der in der zweiten Liste enthaltenen Kennnummern, und
- Erzeugen des Transaktionsabwicklungsdatensatzes abhängig vom Ergebnis des Vergleichs.

Entsprechend kann das erfindungsgemäße Transaktionssystem in einer bevorzugten Weiterbildung einen zweiten Datenspeicherbereich umfassen, in welchem eine zweite Liste gespeichert ist, in der eine Mehrzahl von verschiedenen Kennnummern enthalten ist, wobei mit den Abwicklungsdatensatzerzeugungsmitteln gekoppelte erste Prüfmittel dazu eingerichtet sind, wenigstens einen Teil der übermittelten Transaktionsberechtigungs-Kenndaten mit wenigstens einem Teil der in der zweiten Liste enthaltenen Kennnummern zu vergleichen, wobei die Abwicklungsdatensatzerzeugungsmittel dazu eingerichtet sind, den Transaktionsabwicklungsdatensatz abhängig vom Vergleichsergebnis der ersten Prüfmittel zu erzeugen.

Eine derartige Ausgestaltung des Transaktionsverfahren und des Transaktionssystems erlaubt eine Autorisierungsprüfung der Transaktion durch Vergleich der Transaktionsberechtigungs-Kenndaten (oder zumindest eines Teils derselben) mit den Einträgen in der zweiten Liste. Letztere kann hierzu als eine Liste von gesperrten Kennnummern oder alternativ als eine Liste von zulässigen Kennnummern ausgebildet sein. Es ist sogar denkbar, sowohl eine Sperrliste als auch eine erlaubte Liste zu speichern und die Transaktionsberechtigungs-Kenndaten gegen beide Listen zu prüfen. Erst wenn die Prüfung ergibt, dass die Transaktionsberechtigungs-Kenndaten keine verbotene Kennnummer bzw. eine erlaubte Kennnummer enthalten und die Transaktion dementsprechend autorisiert werden kann, erfolgt bei dieser bevorzugten Ausführungsform die Umsetzung von den Transaktionsberechtigungs-Kenndaten in den Transaktionsabwicklungs-Kenncode unter Zugriff auf die Konkordanzliste. Es versteht sich freilich, dass eine umgekehrte Vorgehensweise nicht grundsätzlich ausgeschlossen ist, dass also auch zuerst die Umsetzung in den Transaktionsabwicklungs-Kenncode vorgenommen werden kann und danach eine Autorisierungsprüfung mit Listenvergleich.

Es ist vorstellbar, dass ein Kenninformationsträgerobjekt, auf dem eine oder mehrere für die Bildung der Transaktionsberechtigungs-Kenndaten maschinell zu lesende Kenninformationen gespeichert sind, auch schon den Transaktionsabwicklungs-Kenncode enthalten. Ein solches Kenninformationsträgerobjekt würde sich neben dem erfindungsgemäßen Transaktionsverfahren grundsätzlich auch für ein herkömmliches Transaktionsverfahren eignen, bei dem sozusagen ohne Umweg über die Transaktionsberechtigungs-Kenndaten gleich der Transaktionsabwicklungs-Kenncode gelesen wird und dementsprechend keine Konkordanzliste zur Umsetzung der Transaktionsberechtigungs-Kenndaten in den Transaktionsabwicklungs-Kenncode erforderlich ist. Es ist weiter vorstellbar, dass ein solches Kenninformationsträgerobjekt einer besonderen Zulassung für das erfindungsgemäße Transaktionsverfahren bedarf. Denn solange die Konkordanz zwischen den Transaktionsberechtigungs-Kenndaten und dem Transaktionsabwicklungs-Kenncode des betreffenden Kenninformationsträgerobjekts nicht in der Konkordanzliste gespeichert ist, kann das erfindungsgemäße Transaktionsverfahren nicht bei diesem Kenninformationsträgerobjekt eingesetzt werden.

Um erkennen zu können, ob das Kenninformationsträgerobjekt für das erfindungsgemäße Verfahren zugelassen ist, kann in dem Kenninformationsträgerobjekt ein vorbestimmtes Informationsfeld gespeichert sein. Der Inhalt dieses Informationsfelds kann anzeigen, ob eine Transaktion nach dem erfindungsgemäßen Verfahren oder eine Transaktion nach der herkömmlichen Vorgehensweise auszuführen ist. Je nach Inhalt des Informationsfelds wird dann entweder der Transaktionsabwicklungs-Kenncode direkt aus dem Kenninformationsträgerobjekt ausgelesen und übermittelt oder es werden eine oder mehrere Kenninformationen ausgelesen und in Form der Transaktionsberechtigungs-Kenndaten übermittelt.

Insbesondere für vorstehendes Szenario kann deshalb das erfindungsgemäße Transaktionsverfahren die folgenden Schritte umfassen:
- Lesen des Inhalts eines in dem Kenninformationsträgerobjekt gespeicherten vorbestimmten Informationsfelds und
- Lesen der mindestens einen Kenninformation von dem Kenninformationsträgerobjekt abhängig davon, dass das Informationsfeld (32) einen vorbestimmten Inhalt besitzt.

Entsprechend kann das erfindungsgemäße Transaktionssystem zweite Prüfmittel umfassen, welche dazu eingerichtet sind, den durch die Lesemittel gelesenen Inhalt eines in dem Kenninformationsträgerobjekt gespeicherten vorbestimmten Informationsfelds zu prüfen und das Lesen der mindestens einen Kenninformation von dem Kenninformationsträgerobjekt abhängig davon zu bewirken, dass das Informationsfeld einen vorbestimmten Inhalt besitzt.

Um die benötigten Daten für die Konkordanzliste sammeln zu können, kann bei einer Ausführungsform der Erfindung ein Prüfschritt implementiert sein, bei dem geprüft wird, ob die erste Liste einen Eintrag für oder in Zuordnung zu wenigstens einem Teil der übermittelten Transaktionsberechtigungs-Kenndaten enthält. Es kann nämlich sein, dass die empfangenen Transaktionsberechtigungs-Kenndaten in der Konkordanzliste nicht verzeichnet sind oder dass die Liste zumindest einen Eintrag für die Transaktionsberechtigungs-Kenndaten hat, aber ein zugeordneter Eintrag für einen Transaktionsabwicklungs-Kenncode fehlt. In beiden Fällen kann kein Transaktionsabwicklungsdatensatz erzeugt werden, weil der hierfür benötigte Transaktionsabwicklungs-Kenncode nicht verfügbar ist. Bei der betrachteten Ausführungsform wird dann eine Aufforderungsnachricht zur Übermittlung eines den Transaktionsberechtigungs-Kenndaten zugeordneten Transaktionsabwicklungs-Kenncodes erzeugt und abgeschickt. Werden auf diese Aufforderung hin die Transaktionsberechtigungs-Kenndaten erneut übermittelt, diesmal jedoch zusammen mit dem Transaktionsabwicklungs-Kenncode, so kann die Konkordanzliste entsprechend aktualisiert werden. Für alle nachfolgenden Transaktionen des betreffenden Transaktionsteilnehmers genügt dann die Übermittlung der Transaktionsberechtigungs-Kenndaten allein, da deren Zuordnung zum Transaktionsabwicklungs-Kenncode nunmehr in der Konkordanzliste verzeichnet ist. Diese Ausführungsform erlaubt es somit, bei Kenninformations-trägerobjekten, die neben einer oder mehreren für die Bildung der Transaktionsberechtigungs-Kenndaten verwendbaren Kenninformationen auch schon den Transaktionsabwicklungs-Kenncode enthalten, zur Durchführung einer Transaktion stets zunächst nur die Transaktionsberechtigungs-Kenndaten zu übermitteln. Sollte eine Aufforderung zur Übermittlung auch des Transaktionsabwicklungs-Kenncodes zurückkommen, weil dieser in der Konkordanzliste nicht verzeichnet ist, kann er im Rahmen einer erneuten Übermittlung zusammen mit den Transaktionsberechtigungs-Kenndaten nachgeliefert werden, damit die Konkordanzliste vervollständigt werden kann.

Bei dem erfindungsgemäßen Transaktionssystem können dementsprechend die Listenzugriffsmittel zur Prüfung eingerichtet sein, ob die erste Liste einen Eintrag für oder in Zuordnung zu wenigstens einem Teil der übermittelten Transaktionsberechtigungs-Kenndaten enthält, wobei sie ferner dazu eingerichtet sein können, die Erzeugung einer Aufforderungsnachricht zur Übermittlung eines den Transaktionsberechtigungs-Kenndaten zugeordneten Transaktionsabwicklungs-Kenncodes zu bewirken, falls die erste Liste keinen derartigen Eintrag enthält, und den übermittelten Transaktionsabwicklungs-Kenncode in die erste Liste in Zuordnung zu den Transaktionsberechtigungs-Kenndaten einzutragen.

Das erfindungsgemäße Transaktionssystem umfasst bevorzugt eine zur Erzeugung der Transaktionsberechtigungs-Kenndaten ausgebildete Endgeräteanordnung sowie eine die Abwicklungsdatensatzerzeugungsmittel umfassende, über ein Datenkommunikationsnetz mit der Endgeräteanordnung gekoppelte elektronische Transaktionsautorisierungseinheit. Die Endgeräteanordnung kann beispielsweise ein Kartenterminal umfassen, das zur Durchführung von Transaktionen mit Zahlungs- oder Wertkarten ausgebildet ist. Sie kann beispielsweise auch von einem Heimcomputer gebildet sein, von dem aus ein Transaktionsteilnehmer eine Transaktion starten möchte. Aber auch ein Mobiltelefon oder ein anderes Mobilgerät kann als Endgeräteanordnung dienen. Die Transaktionsautorisierungseinheit kann beispielsweise auf einem Host-Server eines Transaktionsnetzbetreibers implementiert sein. Sie kann den ersten Datenspeicherbereich und die Listenzugriffsmittel sowie ggf. den zweiten Datenspeicherbereich und die ersten Prüfmittel umfassen. Alternativ kann die Endgeräteanordnung den ersten Datenspeicherbereich und die Listenzugriffsmittel umfassen.

Schutz wird im Rahmen der Erfindung darüber hinaus für die Endgeräteanordnung sowie die Transaktionsautorisierungseinheit eines derartigen Transaktionssystems angestrebt.

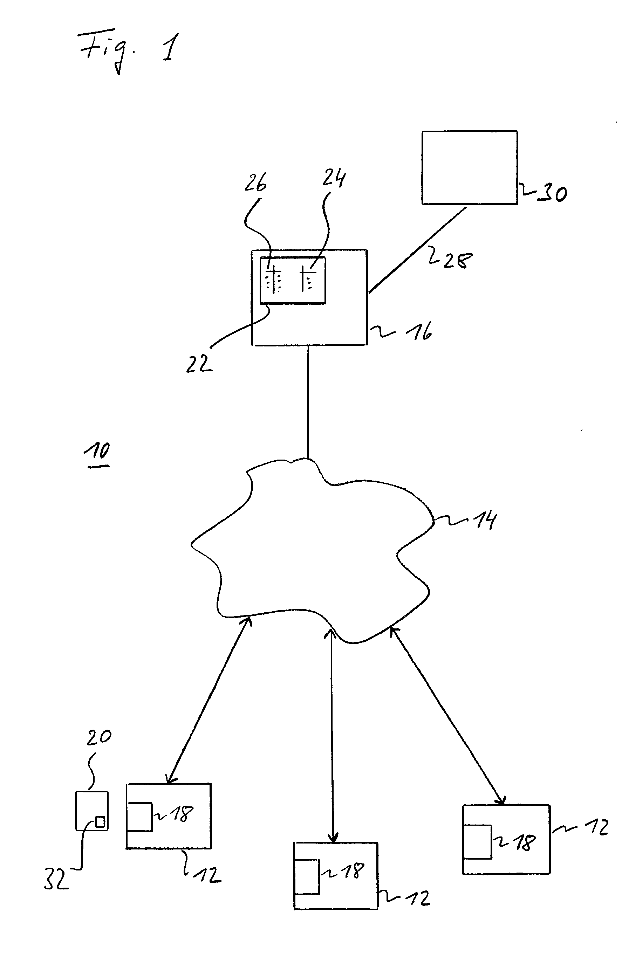

Die Erfindung wird nachfolgend anhand der beigefügten Zeichnung weiter erläutert. Deren einzige Fig. 1 zeigt schematisch ein Ausführungsbeispiel eines allgemein mit 10 bezeichneten Transaktionssystems, welches eine Mehrzahl von Transaktionsterminals 12 umfasst, die über ein Datenkommunikationsnetz 14 mit einer entfernt angeordneten Transaktionsautorisierungseinheit 16 kommunikationsmäßig gekoppelt sind. Die Terminals 12, die jeweils eine Endgeräteanordnung im Sinne der Erfindung bilden, umfassen jeweils eine Lesevorrichtung 18, mittels welcher sie Daten von einem als Kenninformationsträgerobjekt dienenden Transaktionsberechtigungsmedium 20 lesen können. Die Lesevorrichtung 18 kann eine berührungslose Lesevorrichtung sein, welche die gewünschten Daten beispielsweise auf optische oder induktive Weise von dem Transaktionsberechtigungsmedium 20 liest. Sie kann alternativ eine berührende Lesevorrichtung sein, welche mit elektrischen Kontaktfeldern des Transaktionsberechtigungsmediums 20 in Kontakt tritt und Daten elektrisch ausliest. Eine magnetische Auslesung von Daten von dem Transaktionsberechtigungsmedium 20 ist ebenfalls möglich.

Das Transaktionsberechtigungsmedium 20 kann ein tragbarer, mitführbarer Gegenstand beispielsweise in Form einer dünnen Rechteckkarte sein. Andere Formen des Transaktionsberechtigungsmediums 20 sind ebenso denkbar. Das Transaktionsberechtigungsmedium 20 dient dazu, einen Inhaber desselben zu berechtigen, eine Transaktion, etwa eine Zahlungstransaktion, zu veranlassen. Hierzu enthält das Transaktionsberechtigungsmedium 20 eine Anzahl von Daten, von denen das jeweilige Terminal 12 zur Durchführung einer Transaktion eine oder mehrere Kenninformationen liest. Diese sind beispielsweise in einem elektronischen Chip oder in einem Magnetspeicherfeld oder im Körper des Transaktionsberechtigungsmediums 20 gespeichert. Die gelesenen Daten erlauben eine eindeutige Zuordnung zu einem Transaktionskonto-Kenncode des Inhabers des Transaktionsberechtigungsmediums 20, erlauben es jedoch ohne Kenntnis dieser Zuordnung nicht, diesen Transaktionskonto-Kenncode zu identifizieren. Der Transaktionskonto-Kenncode ist für die Abwicklung der Transaktion erforderlich; er bildet ein Beispiel eines Transaktionsabwicklungs-Kenncodes im Sinne der Erfindung.

Die gelesene(n) Kenninformation(en) kann (können) beispielsweise eine vom Hersteller oder Herausgeber des Transaktionsberechtigungsmediums vergebene Nummer umfassen, so beispielsweise eine Chipseriennummer für den Fall, dass das Transaktionsberechtigungsmedium mit einem Chip ausgeführt ist, oder/und eine Kartennummer im Fall eines kartenförmigen Transaktionsberechtigungsmediums. Es ist darauf hinzuweisen, dass die gelesene(n) Kenninformation(en) alternativ oder zusätzlich nicht nummernmäßige Kenndaten umfassen kann (können). Es versteht sich darüber hinaus, dass mehrere Kennnummern von dem Transaktionsberechtigungsmedium gelesen werden können, so beispielsweise eine herstellerseitig oder herausgeberseitig vergebene Identifizierungsnummer und ein Verfallsdatum des Transaktionsberechtigungsmediums. Wichtig ist lediglich, dass die gelesene(n) Kenninformation(en) in eindeutige Zuordnung zum Transaktionskonto-Kenncode des Inhabers des Transaktionsberechtigungsmediums gesetzt werden kann (können).

Jedes Terminal 12 ist hardware- und/oder softwaremäßig dazu eingerichtet, die gelesene(n) Kenninformation(en) als Transaktionsberechtigungs-Kenndaten, ggf. zusammen mit weiteren transaktionsrelevanten Daten wie beispielsweise einem Transaktionsbetrag und Hinweisen auf einen Transaktionsempfänger, in einer elektronischen Nachricht über das Datenkommunikationsnetz 14 an die Transaktionsautorisierungseinheit 16 zu übermitteln. Das Datenkommunikationsnetz 14 kann beispielsweise ein lokales Netzwerk, ein öffentliches Telekommunikationsnetz, ein Mobilfunknetz, das Internet oder andere drahtlose oder verdrahtete Netzwerke umfassen.

Die Transaktionsautorisierungseinheit 16 ist hardware- und/oder softwaremäßig dazu eingerichtet, die vom betreffenden Terminal 12 gesendete elektronische Nachricht zu empfangen und zu prüfen, ob die gewünschte Transaktion autorisiert werden kann. Hierzu kann sie bei einer Ausführungsform auf eine Negativliste von gesperrten Kennnummern oder/und eine Positivliste von zulässigen Kennnummern zugreifen, die in einem ersten Speicherbereich eines bei 22 angedeuteten elektronischen Speichers der Transaktionsautorisierungseinheit 16 gespeichert ist bzw. sind. Die Negativ- bzw. Positivliste ist in der Zeichnung mit 24 bezeichnet und stellt ein Beispiel einer zweiten Liste im Sinne der Erfindung dar. Zur Autorisierungsprüfung vergleicht die Transaktionsautorisierungseinheit 16 die in der elektronischen Nachricht enthaltenen Transaktionsberechtigungs-Kenndaten (oder zumindest einen Teil derselben) mit den Einträgen in der Negativliste oder/und der Positivliste 24. Beispielsweise kann die Transaktionsautorisierungseinheit 16 prüfen, ob eine in den Transaktionsberechtigungs-Kenndaten enthaltene Kartennummer oder Chipseriennummer des ausgelesenen Transaktionsberechtigungsmediums mit einem der Einträge in der Negativliste oder/und der Positivliste 24 übereinstimmt. Stellt sie fest, dass die Karten- oder Chipseriennummer nicht gesperrt ist, greift sie auf eine in einem zweiten Speicherbereich des Speichers 22 gespeicherte Konkordanzliste 26 zu, um aus dieser den Transaktionskonto-Kenncode des Inhabers des Transaktionsberechtigungsmediums zu entnehmen. Der Speicher 22 kann beispielsweise in Form einer Datenbank organisiert sein.

Die Konkordanzliste 26 stellt eine erste Liste im Sinne der Erfindung dar. Sie enthält in Zuordnung zu einer Vielzahl unterschiedlicher Transaktionsberechtigungs-Kenndaten (oder von Teilen hiervon) jeweils einen Transaktionskonto-Kenncode. Dieser kann sich aus mehreren Kennnummern zusammensetzen, so zum Beispiel aus einem Code einer das Transaktionskonto verwaltenden Instanz und der Nummer des Transaktionskontos bei dieser Instanz.

Stellt die Transaktionsautorisierungseinheit 16 fest, dass die Karten- oder Chipseriennummer gesperrt ist, sendet sie eine entsprechende Nachricht an das anfragende Terminal 12 zurück, mit der sie,die angeforderte Transaktion ablehnt.

Es versteht sich, dass bei einer abgewandelten Ausführungsform zunächst die Transaktionsberechtigungs-Kenndaten mit Hilfe der Konkordanzliste 26 in den Transaktionskonto-Kenncode umgesetzt werden können und erst anschließend die Autorisierungsprüfung durch Vergleich mit der Negativ- bzw. Positivliste 24 erfolgen kann.

Im Fall einer erfolgreichen Autorisierung der Transaktion erzeugt die Transaktionsautorisierungseinheit 16 mit dem aus der Konkordanzliste 26 entnommenen Transaktionskonto-Kenncode und ggf. weiteren vom Terminal 12 mitgesendeten Daten einen Transaktionsabwicklungsdatensatz, den sie über eine Datenkommunikationsstrecke 28 an ein Transaktionsabwicklungssystem 30 übermittelt. Das Transaktionsabwicklungssystem 30 hat in nicht näher dargestellter Weise direkten oder indirekten Zugriff auf das Transaktionskonto des Inhabers des Transaktionsberechtigungsmediums 20 und veranlasst beispielsweise eine entsprechende Aktualisierung des Kontowerts. Die Datenkommunikationsstrecke 28 kann Teil eines lokalen Netzwerkes sein. Es ist aber ebenso möglich, dass die Transaktionsautorisierungseinheit 16 und das Transaktionsabwicklungssystem 30 über ein öffentliches Telekommunikationsnetz, das Internet oder ein anderes großräumiges Kommunikationsnetz verbunden sind.

Bei einer Weiterbildung kann in dem Transaktionsberechtigungsmedium 20 ein beispielsweise nur 1 Bit großes Datenfeld - schematisch bei 32 angedeutet - vorgesehen sein, dessen Inhalt von dem lesenden Terminal 12 zunächst geprüft wird. Nur wenn dieses Datenfeld 32 einen vorbestimmten Inhalt hat, es beispielsweise auf "1" gesetzt ist, liest das Terminal 12 die mindestens eine Kenninformation von dem Transaktionsberechtigungsmedium 20 und erzeugt die Transaktionsberechtigungs-Kenndaten. Hat das Datenfeld 32 dagegen einen anderen Inhalt, etwa den Wert "0", veranlasst das Terminal 12 entweder eine Transaktionsdurchführung nach einem anderen, herkömmlichen Verfahren (falls beispielsweise der Transaktionskonto-Kenncode auch schon in dem Transaktionsberechtigungsmedium 20 gespeichert ist) oder es lehnt die gewünschte Transaktion ab.

Die Transaktionsberechtigungs-Kenndaten können gemäß einer Variante eine Kurzversion eines Identifizierungscodes umfassen, zu dem in der Konkordanzliste eine in den Transaktionsabwicklungsdatensatz einzufügende Langversion des Identifizierungscodes als Transaktionsabwicklungs-Kenncode enthalten ist. Insbesondere, jedoch nicht nur in einem solchen Fall ist es vorstellbar, dass die Umsetzung von der Kurzversion in die Langversion in den Terminals 12 statt in der Transaktionsautorisierungseinheit 16 stattfindet. Hierzu müsste jedes der entsprechenden Terminals 12 eine Kopie der Konkordanzliste 26 speichern. Selbstverständlich kann alternativ die gelesene Kurzversion des Identifizierungscodes von dem entsprechenden Terminal 12 zunächst an die Transaktionsautorisierungseinheit 16 gesendet werden, bevor sie dort an zentraler Stelle in die Langversion umgesetzt wird. Ein Beispiel für einen I-dentifizierungscode mit Kurz- und Langversion ist ein Bankidentifizierungscode.

Aus vorstehendem ergibt sich, dass die Konkordanzliste 26 und geeignete Softwareoder/und Hardwaremittel zum Zugriff auf selbige wahlweise in der Transaktionsautorisierungseinheit 16 oder in den Terminals 12 gespeichert bzw. implementiert sein können.

Nachzutragen ist, dass die Datenübermittlung zwischen den Terminals 12 und der Transaktionsautorisierungseinheit 16 zumindest auf einem Teil der Übertragungsstrecke verschlüsselt erfolgen kann, um die Abhörsicherheit zu erhöhen. Hinsichtlich der Terminals 12 versteht es sich, dass sie die Leser 18 nicht notwendig als integrale Komponente enthalten müssen. Stattdessen ist es vorstellbar, dass zumindest ein Teil der Terminals 12 mit einem externen Leser 18 verbunden ist. Die Absendung einer Autorisierungsanfrage von einem der Terminals 12 an die Transaktionsautorisierungseinheit 16 kann wahlweise im Online-Betrieb oder im Offline-Betrieb erfolgen. Unter einem Online-Betrieb wird hierbei eine sofortige Absendung der Autorisierungsanfrage vom Terminal an die Transaktionsautorisierungseinheit 16 verstanden, nachdem die gewünschten Daten vom Transaktionsberechtigungsmittel 20 gelesen wurden. Im Rahmen eines Offline-Betriebs kann dagegen die Autorisierungsprüfung zeitlich nach hinten geschoben werden, indem das Terminal nur zu vorbestimmten Zeiten, beispielsweise nachts, Autorisierungsanfragen an die Transaktionsautorisierungseinheit 16 richtet.

## Patentansprüche

1. Transaktionsverfahren, umfassend die Schritte:
- Übermitteln von Transaktionsberechtigungs-Kenndaten,
- Bereitstellen einer gespeicherten ersten Liste (26), welche in Zuordnung zu einer Vielzahl verschiedener Transaktionsberechtigungs-Kenndaten jeweils mindestens einen Transaktionsabwicklungs-Kenncode enthält,
- Zugreifen auf die erste Liste (26) zur Ermittlung eines den übermittelten Transaktionsberechtigungs-Kenndaten zugeordneten Transaktionsabwicklungs-Kenncodes,
- Erzeugen eines Transaktionsabwicklungsdatensatzes unter Verwendung des aus der ersten Liste (26) ermittelten Transaktionsabwicklungs-Kenncodes und
- Übermitteln des Transaktionsabwicklungsdatensatzes über ein Kommunikationsnetz (28) an ein elektronisches Transaktionsabwicklungssystem (30).

2. Transaktionsverfahren nach Anspruch 1, **gekennzeichnet durch** die Schritte:
- maschinelles Lesen mindestens einer Kenninformation von einem Kenninformationsträgerobjekt (20) und
- Bilden wenigstens eines Teils der Transaktionsberechtigungs-Kenndaten auf Grundlage der gelesenen mindestens einen Kenninformation.

3. Transaktionsverfahren nach Anspruch 1 oder 2, **gekennzeichnet durch** die Schritte:
- Erfassen mindestens einer mittels einer benutzerbedienbaren Eingabevorrichtung eines Datenverarbeitungsgeräts eingegebenen Kenninformation und
- Bilden wenigstens eines Teils der Transaktionsberechtigungs-Kenndaten auf Grundlage der eingegebenen mindestens einen Kenninformation.

4. Transaktionsverfahren nach einem der Ansprüche 1 bis 3, **gekennzeichnet durch** die Schritte:
- Bereitstellen einer gespeicherten zweiten Liste (24), welche eine Mehrzahl verschiedener Kennnummern enthält,
- Vergleichen wenigstens eines Teils der übermittelten Transaktionsberechtigungs-Kenndaten mit wenigstens einem Teil der in der zweiten Liste (24) enthaltenen Kennnummern, und
- Erzeugen des Transaktionsabwicklungsdatensatzes abhängig vom Ergebnis des Vergleichs.

5. Transaktionsverfahren nach einem der Ansprüche 2 bis 4, **gekennzeichnet durch** die Schritte:
- Lesen des Inhalts eines in dem Kenninformationsträgerobjekt (20) gespeicherten vorbestimmten Informationsfelds (32) und
- Lesen der mindestens einen Kenninformation von dem Kenninformationsträgerobjekt (20) abhängig davon, dass das Informationsfeld (32) einen vorbestimmten Inhalt besitzt.

6. Transaktionsverfahren nach einem der Ansprüche 1 bis 5, **gekennzeichnet durch** die Schritte:
- Prüfen, ob die erste Liste (26) einen Eintrag für oder in Zuordnung zu wenigstens einem Teil der übermittelten Transaktionsberechtigungs-Kenndaten enthält,
- falls die erste Liste (26) keinen derartigen Eintrag enthält, Erzeugen einer Aufforderungsnachricht zur Übermittlung eines den Transaktionsberechtigungs-Kenndaten zugeordneten Transaktionsabwicklungs-Kenncodes,
- Eintragen des übermittelten Transaktionsabwicklungs-Kenncodes in die erste Liste (26) in Zuordnung zu den Transaktionsberechtigungs-Kenndaten.

7. Transaktionssystem, insbesondere zur Durchführung des Verfahrens nach einem der Ansprüche 1 bis 6, umfassend:
- einen ersten Datenspeicherbereich (22), in welchem eine erste Liste (26) gespeichert ist, die in Zuordnung zu einer Vielzahl verschiedener Transaktionsberechtigungs-Kenndaten jeweils mindestens einen Transaktionsabwicklungs-Kenncode enthält,
- Listenzugriffsmittel, welche dazu eingerichtet sind, übermittelte Transaktionsberechtigungs-Kenndaten zu erhalten und auf die erste Liste (26) zur Ermittlung eines den übermittelten Transaktionsberechtigungs-Kenndaten zugeordneten Transaktionsabwicklungs-Kenncodes zuzugreifen, und
- Abwicklungsdatensatzerzeugungsmittel, welche dazu eingerichtet sind, einen Transaktionsabwicklungsdatensatz unter Verwendung des aus der ersten Liste (26) ermittelten Transaktionsabwicklungs-Kenncodes zu erzeugen und den Transaktionsabwicklungsdatensatz über ein Kommunikationsnetz (28) an ein elektronisches Transaktionsabwicklungssystem (30) zu übermitteln.

8. Transaktionssystem nach Anspruch 7,
**gekennzeichnet durch** Lesemittel (18), welche dazu eingerichtet sind, mindestens eine Kenninformation von einem Kenninformationsträgerobjekt (20) zu lesen und wenigstens einen Teil der Transaktionsberechtigungs-Kenndaten auf Grundlage der gelesenen mindestens einen Kenninformation zu bilden.

9. Transaktionssystem nach Anspruch 7 oder 8,
**gekennzeichnet durch** einen zweiten Datenspeicherbereich (22), in welchem eine zweite Liste (24) gespeichert ist, in der eine Mehrzahl von verschiedenen Kennnummern enthalten ist, wobei mit den Abwicklungsdatensatzerzeugungsmitteln gekoppelte erste Prüfmittel dazu eingerichtet sind, wenigstens einen Teil der übermittelten Transaktionsberechtigungs-Kenndaten mit wenigstens einem Teil der in der zweiten Liste (24) enthaltenen Kennnummern zu vergleichen, wobei die Abwicklungsdatensatzerzeugungsmittel dazu eingerichtet sind, den Transaktionsabwicklungsdatensatz abhängig vom Vergleichsergebnis der ersten Prüfmittel zu erzeugen.

10. Transaktionssystem nach einem der Ansprüche 7 bis 9,
**dadurch gekennzeichnet, dass** die Listenzugriffsmittel zur Prüfung eingerichtet sind, ob die erste Liste (26) einen Eintrag für oder in Zuordnung zu wenigstens einem Teil der übermittelten Transaktionsberechtigungs-Kenndaten enthält, wobei sie ferner dazu eingerichtet sind, die Erzeugung einer Aufforderungsnachricht zur Übermittlung eines den Transaktionsberechtigungs-Kenndaten zugeordneten Transaktionsabwicklungs-Kenncodes zu bewirken, falls die erste Liste (26) keinen derartigen Eintrag enthält, und den übermittelten Transaktionsabwicklungs-Kenncode in die erste Liste in Zuordnung zu den Transaktionsberechtigungs-Kenndaten einzutragen.

11. Transaktionssystem nach einem der Ansprüche 8 bis 10,
**gekennzeichnet durch** zweite Prüfmittel, welche dazu eingerichtet sind, den **durch** die Lesemittel (18) gelesenen Inhalt eines in dem Kenninformationsträgerobjekt (20) gespeicherten vorbestimmten Informationsfelds (32) zu prüfen und das Lesen der mindestens einen Kenninformation von dem Kenninformationsträgerobjekt (20) abhängig davon zu bewirken, dass das Informationsfeld (32) einen vorbestimmten Inhalt besitzt.

12. Transaktionssystem nach einem der Ansprüche 7 bis 11, umfassend eine zur Erzeugung der Transaktionsberechtigungs-Kenndaten ausgebildete Endgeräteanordnung (12) sowie eine die Abwicklungsdatensatzerzeugungsmittel umfassende, über ein Datenkommunikationsnetz (14) mit der Endgeräteanordnung gekoppelte elektronische Transaktionsautorisierungseinheit (16).

13. Transaktionssystem nach Anspruch 12,
**dadurch gekennzeichnet, dass** die Transaktionsautorisierungseinheit den ersten Datenspeicherbereich und die Listenzugriffsmittel sowie ggf. den zweiten Datenspeicherbereich und die ersten Prüfmittel umfasst.

14. Transaktionssystem nach Anspruch 12,
**dadurch gekennzeichnet, dass** die Endgeräteanordnung den ersten Datenspeicherbereich und die Listenzugriffsmittel umfasst.

15. Endgeräteanordnung (12) des Transaktionssystems nach einem der Ansprüche 12 bis 14.

16. Transaktionsautorisierungseinheit (16) des Transaktionssystems nach einem der Ansprüche 12 bis 14.
